# EUROPEAN PATENT SPECIFICATION

(11) **EP 3 176 627 B1**
(45) Date of publication and mention of the grant of the patent: **21.08.2019**
(21) Application number: 16200560.7
(22) Date of filing: 24.11.2016
(51) Int. Cl.: G02B 27/10, G02B 27/01, G02B 26/08, G02B 26/10, G02B 27/14

(54) **LIGHT SOURCE APPARATUS, IMAGE DISPLAY APPARATUS AND SYSTEM**
LICHTQUELLENVORRICHTUNG, BILDANZEIGEVORRICHTUNG UND -SYSTEM
APPAREIL À SOURCE LUMINEUSE, APPAREIL ET SYSTÈME D'AFFICHAGE D'IMAGE

(30) Priority: 01.12.2015 JP 2015234669
(43) Date of publication of application: 07.06.2017
(73) Proprietor: Ricoh Company, Ltd., Tokyo 143-8555 (JP)
(72) Inventor: NAKAMURA, Kento, Tokyo, 143-8555 (JP); ICHII, Daisuke, Kanagawa, 222-8530 (JP)
(74) Representative: J A Kemp

(56) References cited:
- WO-A1-2014/208441
- WO-A1-2015/133425
- US-A1- 2008 212 999
- US-A1- 2010 302 513

## Description

### BACKGROUND OF THE INVENTION

### Field of the Invention

The present invention relates to a light source apparatus, an image display apparatus, and a system.

### Description of the Related Art

In recent years, the development of a technique for detecting light has been actively pursued.

For example, JP-2015-108555-A discloses a photosensor in which a cylindrical element is arranged ahead of a detection element (optical detector) such that the detection element is caused to condense only a portion of light entering the cylindrical element, whereby the degradation in detection accuracy is suppressed.

However, the cylindrical element has a complicated design and accordingly, there is a disadvantage in increased cost.

For example, when this photosensor including the cylindrical element is used as an optical detector to detect branched light of combined light obtained by combining a plurality of beams of light emitting from a plurality of light sources, an increase in cost is brought about as a consequence.

WO2014/208441A1 discloses an apparatus for mixing light beams of different colour and having a dichroic mirror to deflect a portion of the mixed beam to a sensor.

US 2010/0302513A1 discloses a projection-type image display apparatus in which three light beams of different wavelength are combined and a portion of the combined beam directed to a light detector.

US 2008/0212999A1 discloses a laser printer in which a laser beam is directed onto a light detector out of focus to avoid reflected light causing instability in the source.

### SUMMARY OF THE INVENTION

According to the present invention there is provided a light source apparatus as defined in the appended claims.

An embodiment according to the present invention can suppress the degradation in detection accuracy, while suppressing an increase in cost.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a view illustrating a schematic arrangement of a head-up display (HUD) apparatus according to an embodiment;
FIG. 2 is a block diagram illustrating a hardware configuration of a control system of the HUD in FIG. 1 according to an embodiment;
FIG. 3 is a block diagram illustrating a functional configuration of the HUD in FIG. 1 according to an embodiment;
FIG. 4 is a diagram illustrating a light deflector of the HUD in FIG. 1 according to an embodiment;
FIG. 5 is a diagram illustrating an exemplary scan line trajectory during two-dimensional scanning according to an embodiment;
FIG. 6 is a diagram illustrating a light source apparatus of the HUD in FIG. 1 according to an embodiment;
FIG. 7A to FIG. 7C are diagrams for explaining incident modes 1 to 3 for light to an optical detector of the light source apparatus according to an embodiment, respectively;
FIG. 8A to FIG. 8C are diagrams for explaining changes in an incident light amount on the optical detector in the incident modes 1 to 3 according to an embodiment, respectively;
FIG. 9 is a diagram for explaining light caused to be defocused from a light-receiving surface of the optical detector according to an embodiment;
FIG. 10 is a diagram for explaining an incident diameter of light on the light-receiving surface caused to change in accordance with a distance from a light source to the optical detector according to an embodiment;
FIG. 11 is a diagram for explaining the incident diameter of light on the light-receiving surface of the optical detector according to an embodiment;
FIG. 12 is a graph illustrating a relationship between a beam waist position and a light flux diameter in a depth curve according to an embodiment;
FIG. 13 is a graph illustrating a relationship between the beam waist position of a light flux entering the optical detector and the light flux diameter thereof in the depth curve corresponding to an α direction according to an embodiment;
FIG. 14 is a graph illustrating a relationship between the beam waist position of the light flux entering the optical detector and the light flux diameter thereof in the depth curve corresponding to a γ direction according to an embodiment; and
FIG. 15 is a diagram for explaining a light source apparatus according to a variation of an embodiment.

The accompanying drawings are intended to depict example embodiments of the present invention and should not be interpreted to limit the scope thereof. The accompanying drawings are not to be considered as drawn to scale unless explicitly noted.

### DETAILED DESCRIPTION OF THE INVENTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

Light emitting from a laser of a head-up display (HUD) is divided into light for generating a virtual image, and light entering an optical detection element to be monitored for the purpose of controlling a color or brightness of the virtual image.

As the light subject to monitoring, the head-up display (HUD) detects light within an image generator (imager) using a photodiode (optical detection element). The light being monitored is used to control the color or the brightness of the virtual image projected on a front glass or a combiner.

More particularly, feedback control is carried out based on the efficiency of an optical element in an initial state and so on concerning what conditions the color or the brightness of the virtual image has with respect to the intensity of the light being monitored.

Meanwhile, when optical systems for causing light to enter the optical detection element are roughly categorized, three optical systems are given as such optical systems. The first one is a system with a diffusion member for diffusing light arranged in front of the optical detection element such that the light is diffused to enter the optical detection element. The second one is a system with a light-condensing member for condensing light arranged in front of the optical detection element such that the light is condensed to enter the optical detection element. The third one is a method without arranging any member in front of the optical detection element such that the light is caused to enter the optical detection element as it is. Among these three methods, the system with a light-condensing member for condensing light arranged in front of the optical detection element such that the light is condensed to enter the optical detection element has been already known as a system in which the amount of light entering the optical detection element is unlikely to be changed due to position fluctuations of the element caused by an initial tolerance and a temperature property over time.

In the conventional optical system for causing light to enter the optical detection element by way of the light-condensing member, however, light is condensed at the optical detection element until reaching a limit when the light is caused to enter and thus, there is a possibility of a fine particle or dust adhered on the optical detection element being burned or a possibility of the optical detection element itself being destroyed. As a consequence, there has been a disadvantage in that there is a risk of difficulties occurring in the control for the color or the brightness of the virtual image.

Meanwhile, in order to solve a disadvantage of the detection element heated to a high temperature during light condensation, which causes a decline in the detection accuracy due to, for example, a noise or an error generating in a detection result by the detection element or the accelerated deterioration of the detection element, JP-2015-108555-A discloses a method for solving this problem by a cylindrical element provided ahead of the detection element such that a proper amount of light is released from the cylindrical element so as to be properly reflected in a repeated manner before entering the detection element.

However, the cylindrical element has a complicated design and accordingly, there is a disadvantage in increased cost.

Taking this situation in consideration, the inventors have conceived the following embodiments in order to solve this disadvantage.

Hereinafter, an HUD 100 serving as an image display apparatus according to an embodiment will be described referring to the drawings.

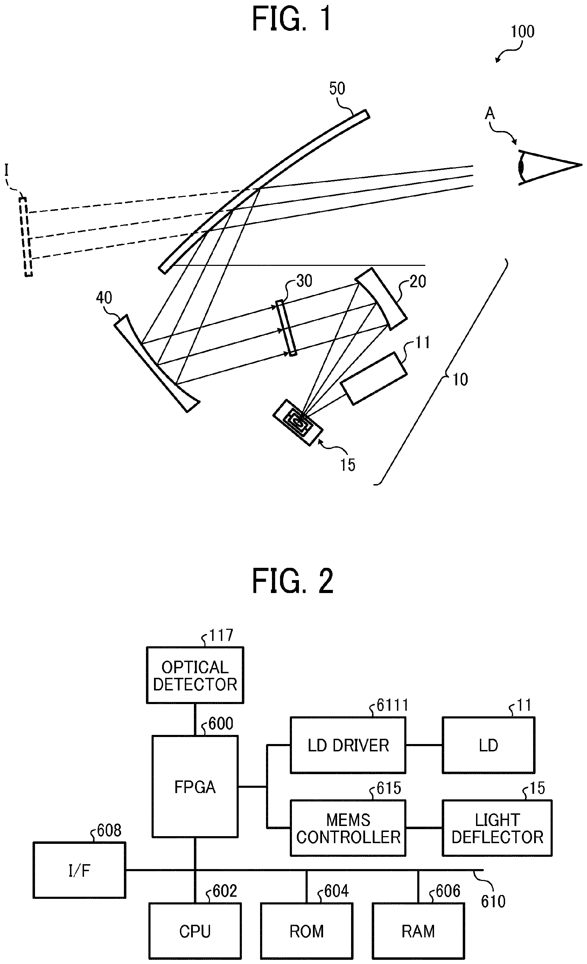

FIG. 1 schematically illustrates a general arrangement of the HUD 100 according to the embodiment.

### <<General Arrangement of HUD>>

The HUD operates in, for example, a "panel mode" and a "laser scanning mode". In the panel mode, the HUD forms an intermediate image with an imaging device such as a liquid crystal panel, a digital mirror device panel (DMD panel), or a vacuum fluorescent display (VFD). In the laser scanning mode, the HUD forms an intermediate image with a two-dimensional scanning device through scanning with a laser beam emitted from a laser light source. The panel mode forms an image through partial blocking of light generated through full-screen light emission. In contrast, the laser scanning mode is capable of assigning light emission or non-light emission to each of pixels, thus forming an image with high contrast in general.

In the following description, the HUD 100 employs the "laser scanning mode". However, the "panel mode" can be also used as the projection mode.

In one example, the HUD 100 is equipped in a moving assembly such as a vehicle, an aircraft, a vessel, or an industrial robot so as to make it possible to visually recognize navigation information used for operating the moving assembly via a front window shield 50 (refer to FIG. 1) of the moving assembly (e.g., a speed of the moving assembly, a traveling direction thereof, a distance to a destination, a name of the place where the moving assembly stays at present, whether an object is on a front side of the moving assembly and where the object is located, a traffic sign such as a speed limit, and information such as traffic jam information). In this case, the front window shield 50 also functions as a transmission reflection member that transmits a portion of light that has entered and reflects at least a portion of the rest thereof. The following description will mainly use an example in which the HUD 100 is equipped in a car provided with the front window shield 50.

As illustrated in FIG. 1, the HUD 100 includes a light source 11, an optical scanner 10 including a light deflector 15 and a scanning mirror 20 (e.g., a concave reflector), a screen 30, and a concave mirror 40. The HUD 100 irradiates the front window shield 50 with light for forming an image (image light) to make it possible to visually recognize a virtual image I from a viewpoint position of a viewer A (here, a driver who is an occupant of the car). In other words, the viewer A can visually recognize an image (intermediate image) formed (drawn) on the screen 30 by the optical scanner 10 via the front window shield 50 as the virtual image I.

In one example, the HUD 100 is arranged below a dashboard of the car, where a distance from the viewpoint position of the viewer A to the front window shield 50 ranges approximately from a several tens of centimeters to one meter at the longest.

The concave mirror 40 is designed using existing optical design simulation software so as to have a certain light condensation power such that an image formation position of the virtual image I is set at a desired position.

In the HUD 100, the light condensation power of the concave mirror 40 is set such that the virtual image I is displayed at a position (depth position) within a range of one meter to 10 meters (both inclusive) (preferably, to six meters (inclusive)) from the viewpoint position of the viewer A.

Note that a usual front window shield is not flat but slightly curved. For this reason, the image formation position of the virtual image I is determined by curved surfaces of the concave mirror 40 and the front window shield 50.

In the light source apparatus 11, three colors of laser light, namely, R, G, and B are combined after being modulated in accordance with image data. A portion of combined light obtained by combining these three colors of the laser light is guided to a reflection surface of the light deflector 15. The light deflector 15 is a micro electro mechanical systems (MEMS) scanner produced through a semiconductor manufacturing process or the like and includes a single micromirror capable of independently oscillating about two axes perpendicularly intersecting with each other. In addition, the light deflector 15 may be configured by combining two MEMS scanners each including a micromirror capable of oscillating about one axis. Furthermore, the scanner is not limited to the MEMS scanner and, for example, a galvano scanner or a polygon scanner may be employed. Details of the light source apparatus 11 and the light deflector 15 will be described later.

Light from the light source apparatus 11 in accordance with the image data (i.e., a portion of the aforementioned combined light) is deflected at the light deflector 15 to turn around at the scanning mirror 20 while spreading of the light is suppressed thereat and then, the screen 30 is irradiated with that light. At this time point, the screen 30 is optically scanned such that the intermediate image is formed on the screen 30. In addition, it is preferable that the concave mirror 40 be designed and arranged so as to correct an optical distortion factor that forms a horizontal line of the intermediate image into a protruding shape upward or downward due to an influence of the front window shield 50.

Light via the screen 30 is reflected at the concave mirror 40 toward the front window shield 50. A portion of a light flux entering the front window shield 50 passes through the front window shield 50 and at least a portion of the rest thereof is reflected toward the viewpoint position of the viewer A. As a result, it is made possible for the viewer A to visually recognize, via the front window shield 50, the virtual image I obtained by enlarging the intermediate image. Specifically, the enlarged virtual image I is displayed by passing through the front window shield 50 when seen from the viewer A.

Note that, also in a case where a combiner is arranged at a position closer to a side of the viewpoint position of the viewer A than the front window shield 50 as the transmission reflection member in such a manner that the combiner is irradiated with light from the concave mirror 40, the virtual image can be displayed in a manner similar to a case where the front window shield 50 is provided alone.

FIG. 2 indicates a block diagram illustrating a hardware arrangement of a control system of the HUD 100. As illustrated in FIG. 2, the control system of the HUD 100 includes a field-programmable gate array (FPGA) 600, a central processing unit (CPU) 602, a read only memory (ROM) 604, an interface (I/F) 608, a bus line 610, a laser diode (LD) driver 6111, and a MEMS controller 615.

In accordance with the image data and an output signal from an optical detector 117 (described later), the FPGA 600 causes an LD (as the light source) 11 to work via the LD driver 6111 and causes the light deflector 15 to work via the MEMS controller 615. The CPU 602 controls respective functions of the HUD 100. The ROM 604 stores an image processing program executed by the CPU 602 to control respective functions of the HUD 100. A random access memory (RAM) 606 is used as a work area for the CPU 602. The I/F 608 is an interface for communicating with an external controller and so on and connected to, for example, a controller area network (CAN) of the car.

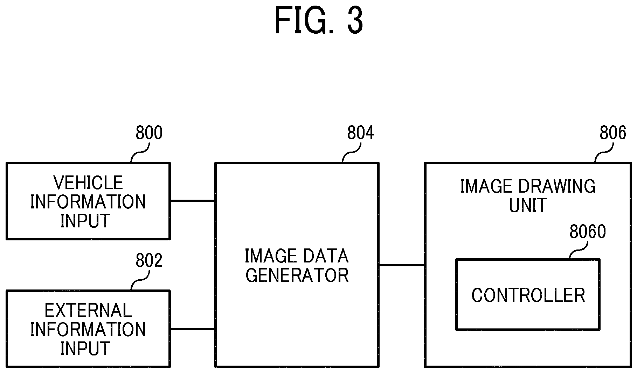

FIG. 3 indicates a block diagram illustrating functions of the HUD 100. As illustrated in FIG. 3, the HUD 100 includes a vehicle information input 800, an external information input 802, an image data generator 804, and an image drawing unit 806. Information on a vehicle (information such as a speed, a travel distance, a distance to a target object, and the brightness of an external world) is input to the vehicle information input 800 from the CAN and so on. Information on the outside of the vehicle (e.g., navigation information from a global positioning system (GPS)) is input to the external information input 802 from an external network. On the basis of the information input from the vehicle information input 800 and the external information input 802, the image data generator 804 generates the image data for an image to be drawn and then transmits the generated image data to the FPGA 600. The image drawing unit 806 includes a controller 8060. The controller 8060 transmits, to the FPGA 600, a control signal for causing the FPGA 600 to start or end image drawing.

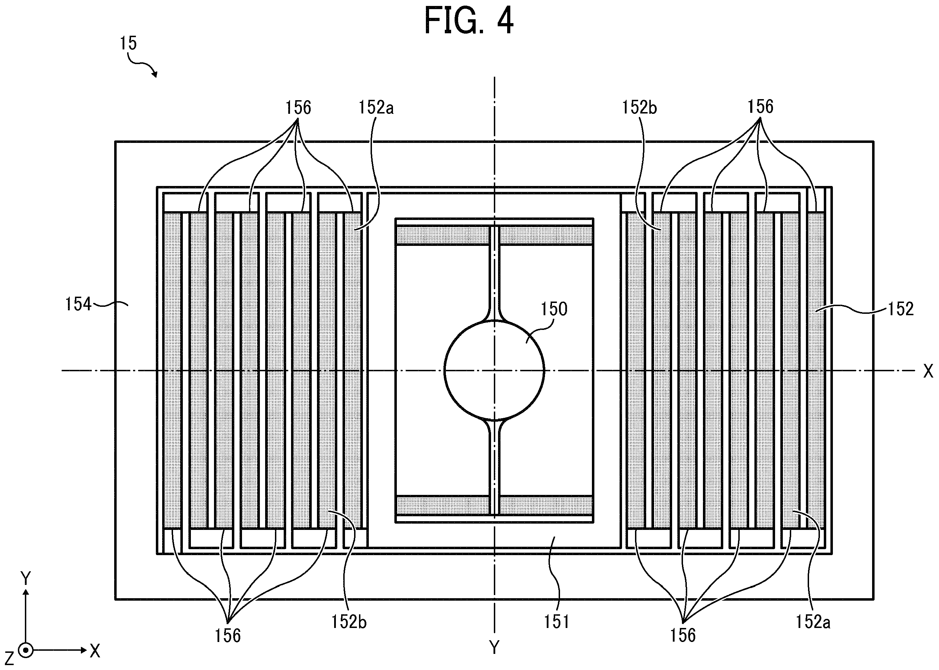

FIG. 4 illustrates an arrangement of the light deflector 15. The light deflector 15 is a MEMS scanner manufactured through a semiconductor process and, as illustrated in FIG. 4, includes a mirror 150 having a reflection surface and a pair of zigzag units 152 including a plurality of beams placed side by side in an X axis direction in such a manner that two adjacent beams are connected so as to turn around at a turnaround point in a zigzag manner. Two adjacent beams of each of the zigzag units 152 are regarded as a beam A (152a) and a beam B (152b) and supported by a frame member 154. A plurality of piezoelectric members 156 (e.g., piezoelectric transducers (PZTs)) is provided at the plurality of beams individually. When voltages different from each other are applied to the piezoelectric members 156 of the two adjacent beams of each of the zigzag units 152, the two adjacent beams of each of the zigzag units 152 are bent in directions different from each other and, after levels of bend are accumulated, the mirror 150 is caused to rotate by a large angle about the X axis (i.e., in a vertical direction). With such an arrangement, the optical scanning in the vertical direction using the X axis as the center is enabled with a lower voltage. Meanwhile, in a horizontal direction using a Y axis as the center, the optical scanning is carried out through resonance by way of, for example, a torsion bar connected to the mirror 150.

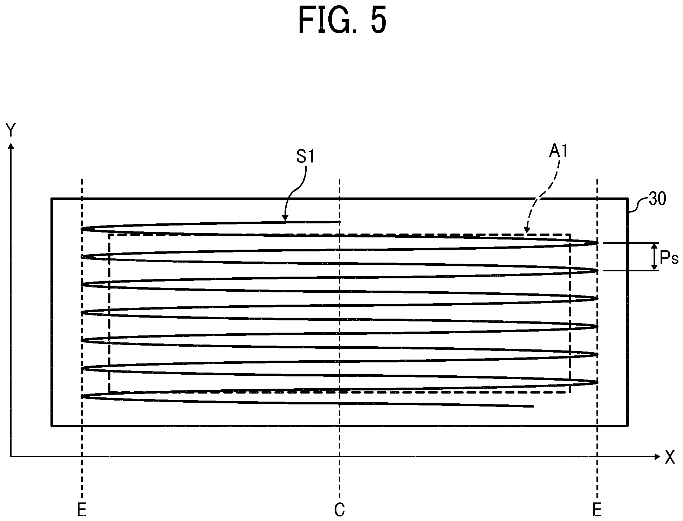

The light deflector 15 configured as described above two-dimensionally scans an image drawing area "A1" on the screen 30 with the laser beam (for example, raster scanning) (indicated by "S1" in FIG. 5) and at the same time, controls the light emission from the LD in accordance with a scanning position of the laser beam, thereby enabling drawing of each of pixels and display of the virtual image. Note that Ps in FIG. 5 represents a scan line pitch, E represents an end of the raster scanning line, and C represents a center of the raster scanning line.

Although only a point image corresponding to the diameter of the laser beam is projected from the HUD 100 at an instant, scanning proceeds at a very high speed and thus, an afterimage remains in a human eye to a sufficient extent within an image of one frame. By utilizing this afterimage phenomenon, the driver perceives as if an image is projected on a "display area". Actually, the image appearing on the screen 30 is reflected by the concave mirror 40 and the front window shield 50 to be perceived by the driver on the "display area" as the virtual image. In such a mechanism, when the image is not displayed, the light emission from the LD is simply stopped. In other words, luminance can be substantially set to zero on the "display area" at a section other than a section on which the virtual image is displayed.

Specifically, the image formation position of the virtual image by the HUD 100 is set to an arbitrary position within a predetermined "display area" on which the virtual image can be formed. This "display area" is determined by specifications of the HUD 100 when designed.

As described above, when the "laser scanning mode" is adopted, various actions can be taken, for example, the LD is turned off or the light amount thereof is reduced in a part other than a part for which display is desired because display is not necessary therein.

In contrast to this, in the "panel mode" that expresses the intermediate image with an imaging device such as a liquid crystal panel or a DMD panel, it is necessary to illuminate an entire panel. For this reason, even when an image signal instructs a black display to obtain no display, it is difficult to set the display completely to zero because of a property of the liquid crystal panel or the DMD panel and accordingly, a black area is seen as being brightened in some cases. In the laser scanning mode, however, this bright black display can be eliminated.

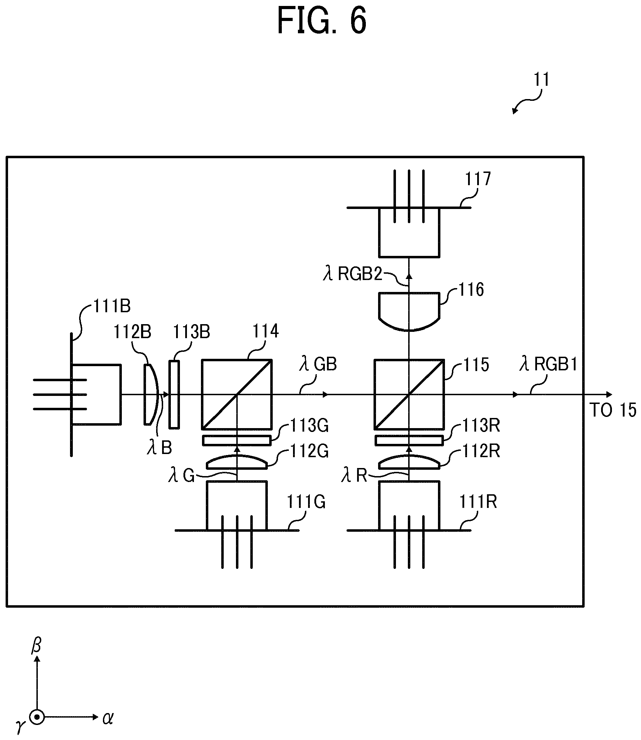

Hereinafter, the light source apparatus 11 will be described in detail. FIG. 6 schematically illustrates an arrangement of the light source apparatus 11. In the following description, an αβγ three-dimensional rectangular coordinate system illustrated in FIG. 6 and so on will be used as appropriate.

As illustrated in FIG. 6, the light source apparatus 11 includes a plurality of (for example, three) light emitting elements 111R, 111B, and 111G each having a single or a plurality of light emitting points, a plurality of (for example, three) coupling lenses 112R, 112G, and 112B, a plurality of (for example, three) apertures 113R, 113G, and 113B, two optical path combining elements 114 and 115, a condenser lens 116, the optical detector 117, and so on.

The respective light emitting elements are, for example, laser diodes (LDs) and emit light fluxes with wavelengths λR, λG, and λB different from one another. For example, λR = 640 nm, λG = 530 nm, and λB = 445 nm are set. Here, emitting directions of the light emitting elements 111R and 111G are assumed as a +β direction, whereas the emitting direction of the light emitting element 111B is assumed as a +α direction. The respective light emitting elements are driven by the FPGA 600 via the LD driver 6111 to be modulated in accordance with the image data. Further, for simplicity, the light fluxes with wavelengths λR, λG, and λB may be referred to as the light fluxes λR, λG, and λB, respectively.

The light fluxes with the wavelengths λR, λG, and λB emitting from the LDs 111R, 111G, and 111B, respectively, are coupled to a subsequent optical system by the corresponding coupling lenses 112R, 112G, and 112B.

The coupled light fluxes are shaped by the corresponding apertures 113R, 113G, and 113B. An opening shape of each of the apertures can be formed into various shapes in accordance with a divergence angle of the light flux and so on, including a circular shape, an elliptical shape, a rectangular shape, and a square shape.

As for the light fluxes with the wavelengths λB and λG via the apertures 113B and 113G, respectively, the optical paths thereof are combined at the optical path combining element 114 (e.g., a dichroic mirror). In more detailed description, the light flux with the wavelength λB via the aperture member 113B passes through the center of the optical path combining element 114 in the +α direction, while the light flux with the wavelengths λG via the aperture member 113G is reflected at the center of the optical path combining element 114 in the +α direction.

Thereafter, an optical path of a combined light flux λGB obtained by combining the light fluxes with the wavelengths λB and λG and an optical path of the light flux with the wavelength λR via the aperture member 113R are combined at the optical path combining element 115 (e.g., a dichroic mirror). Note that, although the two optical path combining elements 114 and 115 are here configured as separate units, the two optical path combining elements 114 and 115 may be provided as an integrated unit.

In more detailed description, a portion of the combined light flux λG passes through the center of the optical path combining element 115 in the +α direction, while the rest thereof is reflected at the center of the optical path combining element 115 in the +β direction. A portion of the light flux with the wavelength AR via the aperture member 113R is reflected at the center of the optical path combining element 115 in the +α direction, while the rest thereof passes through the center of the optical path combining element 115 in the + β direction.

Specifically, a combined light flux λRGB1 obtained by combining a portion of the combined light flux λGB and a portion of the light flux λR emits from the optical path combining element 115 in the +α direction, while a combined light flux λRGB2 obtained by combining the rest of the combined light flux λGB and the rest of the light flux λR emits in the +β direction.

The light deflector 15 is irradiated with the combined light flux λRGB1, which is to be used in image drawing (virtual image display) on the screen 30. Note that, for example, a meniscus lens may be installed between the optical path combining element 115 and the light deflector 15 in such a manner that a concave surface thereof faces a side of the light deflector 15.

The optical detector 117 is irradiated with the combined light flux ARGB2 via the condenser lens 116, which is to be used in monitoring of the incident light amount to adjust the color or the brightness of the virtual image.

In more detailed description, the optical detector 117 outputs, to the FPGA 600, a signal in accordance with the light amount of the combined light flux ARGB2 that has been received. On the basis of the output signal from the optical detector 117, the FPGA 600 sets light emission power (optical output) of each of the light emitting elements such that the light amount of the combined light flux λRGB1 matches a desired light amount and at the same time, a ratio of the light amount among R, G, and B in the combined light flux λRGB1 matches a ratio in accordance with a color to be displayed and then, sends a setting value thereof to the LD driver 6111. The LD driver 6111 applies, to each of the light emitting elements, a driving current in accordance with the setting value of the light emission power set for each of the light emitting elements.

For example, a photodiode (PD) or a phototransistor can be used as the optical detector 117.

Here, the lengths of the optical paths from the respective light emitting elements to the optical path combining element 115 differ from one another. In specific terms, the longest length of the optical path is from the light emitting element 111B to the optical path combining element 115, whereas the shortest length of the optical path is from the light emitting element 111R to the optical path combining element 115. This is derived from a fact that, when white is constituted on the virtual image, a combination ratio of RGB is approximately 2.5:1:0.5, which means that a large amount of red light is required and compared to this, only a small amount of blue light is required. This arrangement is employed to suppress degradation in light use efficiency at the light emitting elements.

Next, three modes 1 to 3 for causing the light flux to enter the optical detector 117 will be described.

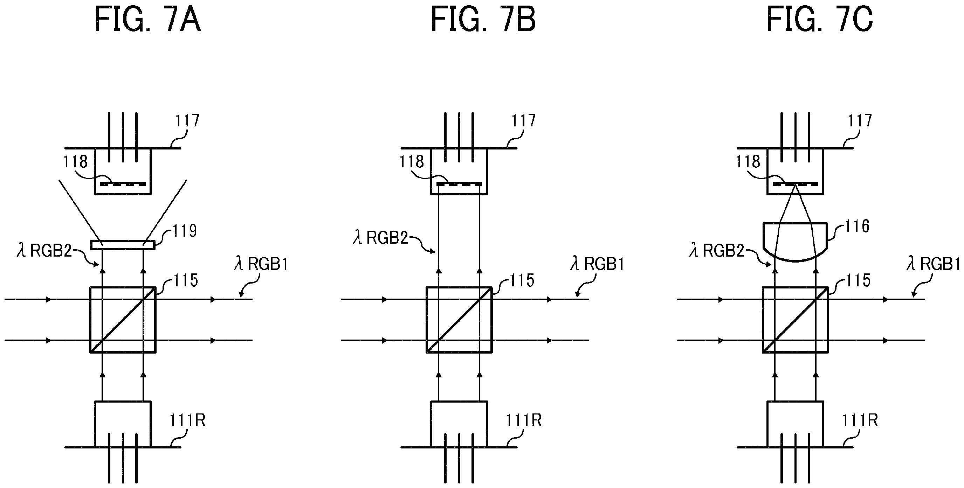

The mode 1 illustrated in FIG. 7A is a mode that converts the combined light flux λRGB2 to diffused light through a light diffusion member 119 to cause the diffused light to enter a light-receiving surface 118 of the optical detector 117.

The mode 2 illustrated in FIG. 7B is a mode not provided with any member between the optical path combining element 115 and the optical detector 117 to cause the combined light flux λRGB2 to directly enter the light-receiving surface 118 of the optical detector 117.

The mode 3 illustrated in FIG. 7C is a mode that condenses light from the combined light flux ARGB2 through the condenser lens 116 to cause the combined light flux ARGB2 that has been condensed to enter the light-receiving surface 118 of the optical detector 117 (a mode according to the embodiment).

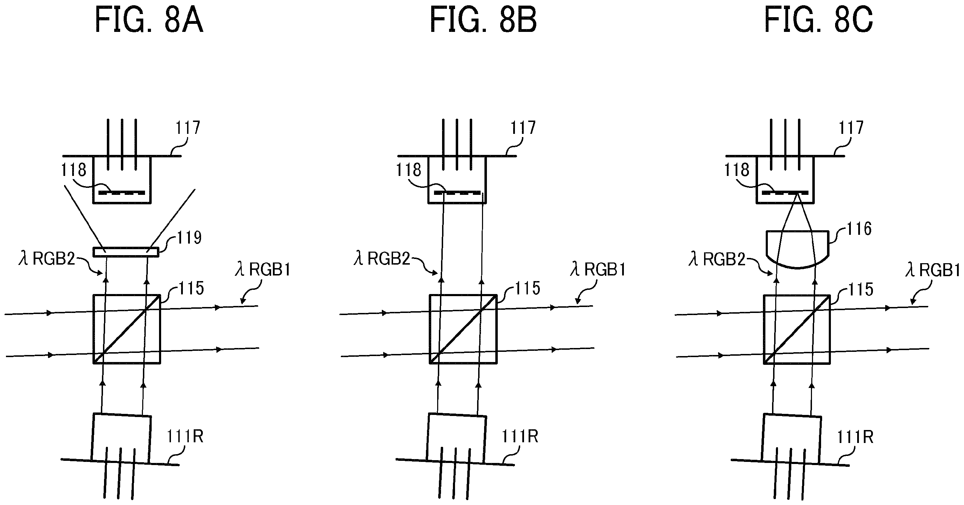

Here, in the aforementioned three modes 1 to 3, when a shift of the optical path occurs due to an initial tolerance of an optical member or an optical component located on the optical path from each of the light emitting elements to the optical detector 117, a change in position or a change in shape over time, a change in the properties of temperature and humidity, and so on, there is a risk where the amount of light entering the optical detector 117 is changed (refer to FIG. 8A to FIG. 8C).

In the mode 1, the combined light flux λRGB2 is converted to the diffused light through the light diffusion member 119. In this diffused light, completely constant intensity is not actually maintained within a plane and typically, Gaussian distribution is utilized. Accordingly, a shift of the optical path occurs and thus, the amount of light entering the optical detector 117 is changed (refer to FIG. 8A).

Also in the mode 2, a shift of the optical path of the combined light flux λRGB2 occurs and thus, the amount of light entering the optical detector 117 is changed.

In regard to the combined light flux λRGB2 in the mode 3, the condenser lens 116 condenses light from the light flux that is to enter the optical detector 117 and, even when a shift of the optical path occurs, that light flux reaches a position within the light-receiving surface 118 of the optical detector 117. Accordingly, the amount of light entering the optical detector 117 is almost not changed.

Next, the mode for causing the light flux to enter the optical detector 117 according to the embodiment (i.e., the aforementioned mode 3) will be described in more detail.

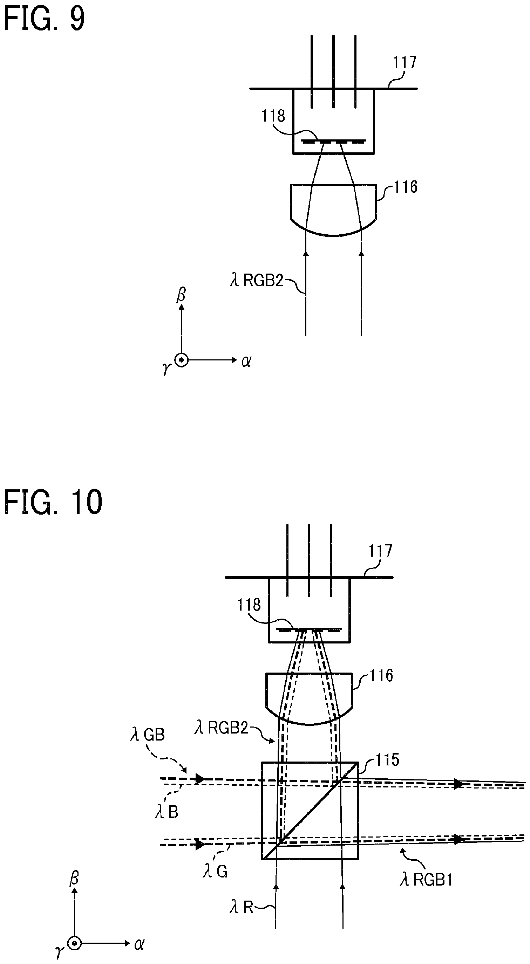

In the embodiment, as illustrated in FIG. 9, focus positions (image formation positions) of the light fluxes of the respective colors in the combined light flux λRGB2 subjected to the light condensation through the condenser lens 116 are shifted off (defocused from) the light-receiving surface 118 of the optical detector 117. The light-receiving surface 118 is here located between the condenser lens 116 and beam waist positions of the plurality of beams of light (three colors of light) in the combined light flux λRGB2.

Specifically, in the embodiment, although the condenser lens 116 condenses light from the light fluxes of the respective colors, an image is not formed on the light-receiving surface 118 of the optical detector 117. This is because, when an image is formed with light on the light-receiving surface 118, there is a risk where the deterioration of the performance of the optical detector 117 is brought about due to a fine particle, dust, or a stain adhered on the light-receiving surface 118, which causes burning when heated with the light flux. In specific terms, a positional relationship between the condenser lens 116 and the optical detector 117 in an optical axis direction of the condenser lens 116 is adjusted such that the image formation positions of the light fluxes of the respective colors via the condenser lens 116 are shifted off the light-receiving surface 118. For this adjustment, the condenser lens 116 may be moved in the optical axis direction thereof by assuming the optical detector 117 as a reference, or alternatively, the optical detector 117 may be moved in the optical axis direction of the condenser lens 116 by assuming the condenser lens 116 as a reference. As another alternative, the optical detector 117 and the condenser lens 116 may be relatively moved in the optical axis direction of the condenser lens 116.

An incident diameter of light from each of the light fluxes of the respective colors on the light-receiving surface 118 (a diameter of a cross-section of incident light), namely, a diameter of a light spot on the light-receiving surface 118 can be enlarged to a certain extent as long as a change in the amount of light entering the light-receiving surface 118 is not caused due to fluctuations in an incident position of the light flux resulting from, for example, an initial tolerance of the light emitting element or a component such as an optical member located on the optical path of light from the light emitting element, a change in position or a change in shape over time, and a change in the properties of temperature and humidity (hereinafter, also referred to as "main causes of incident position fluctuations").

Furthermore, in the embodiment, the incident diameter of the light flux on the light-receiving surface 118 is made smaller for the light flux with a longer optical path from the light emitting element to the optical detector 117 (refer to FIG. 10). In specific terms, the light emitting elements 111R, 111G, and 111B are arranged in such a manner that a longest length of the optical path is obtained for an optical path to the optical detector 117 from the light emitting element 111B for the light flux λB having a largest refractive index at the condenser lens 116 and a smallest incident diameter on the light-receiving surface 118 and simultaneously, a shortest length of the optical path is obtained for an optical path to the optical detector 117 from the light emitting element 111R for the light flux λR having a smallest refractive index at the condenser lens 116 and a largest incident diameter on the light-receiving surface 118. This arrangement is consistent with the arrangement for suppressing degradation in the light use efficiency at the light emitting elements described earlier.

Here, the incident position of the light flux on the optical detector 117 is changed due to the aforementioned main causes of incident position fluctuations. With some incident diameters, the amount of light entering the optical detector 117 (hereinafter, also referred to as "incident light amount") is also changed in accordance with this change in the incident position. Additionally, a change in the incident position due to the main causes of incident position fluctuations is more significant for the light flux having a longer length of the optical path (optical distance) from the light emitting element to the optical detector and accordingly, a change amount is significant as well when the incident light amount is changed. In the situation here, a largest change in the incident light amount occurs in the light flux from the light emitting element 111B, while a smallest change in the incident light amount occurs in the light flux from the light emitting element 111R.

Therefore, in order to reduce a change in the total incident light amount on the optical detector 117, it is preferable that the incident diameter of light from the light emitting element 111B on the optical detector 117 be smaller than the incident diameters of light from the other light emitting elements on the optical detector 117. It is also preferable that the incident diameter of light from the light emitting element 111G on the optical detector 117 be smaller than the incident diameter of light from the light emitting element 111R on the optical detector 117.

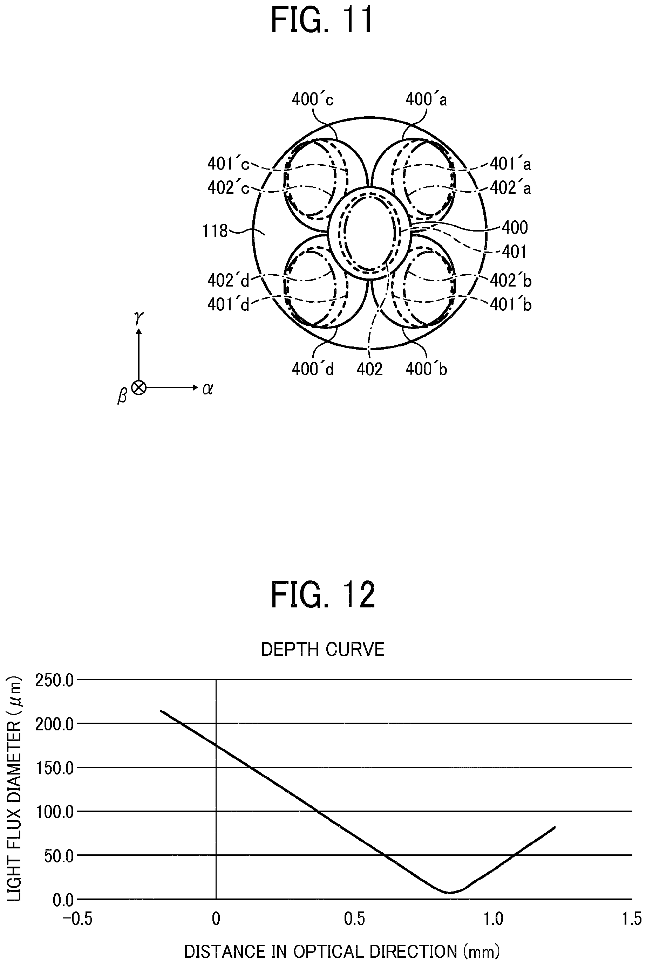

Next, a light flux diameter of light entering the light-receiving surface 118 of the optical detector 117 will be described with reference to FIG. 11. In FIG. 11, light fluxes 400 (λR), 401 (λG), and 402 (λB) from the light emitting elements 111R, 111G, and 111B, respectively, enter the light-receiving surface 118 of the optical detector 117 having a diameter of approximately 0.7.

At this time, the incident positions of the incident light fluxes 400, 401, and 402 on an area within the light-receiving surface 118 can be changed due to the main causes of incident position fluctuations among 400'a, 400'b, 400'c, and 400'd in the case of the incident light flux 400, among 401'a, 401'b, 401'c, and 401'd in the case of the incident light flux 401, and among 402'a, 402'b, 402'c, and 402'd in the case of the incident light flux 402.

To give an example here, a range of changes in the incident positions due to the main causes of incident position fluctuations is α: approximately ±130 µm and γ: approximately ±155 µm for the light λR emitting from the light emitting element 111R, α: approximately ±155 µm and γ: approximately ±170 µm for the light λG emitting from the light emitting element 111G, and α: approximately ±170 µm and γ: approximately ±180 µm for the light λB emitting from the light emitting element 111B.

Taking this situation into account, in order to suppress a change in the light amount of each of the light fluxes entering the optical detector 117 against the main causes of incident position fluctuations and also to maintain the light flux diameter of each of the light fluxes as large as possible, as described earlier, the embodiment arranges the light emitting elements 111R, 111G, and 111B in such a manner that a shortest length of the optical path is obtained for an optical path to the optical detector 117 from the light emitting element 111R for the light flux λR having a smallest refractive index at the condenser lens 116 and a largest light flux diameter on the light-receiving surface 118 and simultaneously, a longest length of the optical path is obtained for an optical path to the optical detector 117 from the light emitting element 111B for the light flux λB having a largest refractive index at the condenser lens 116 and a smallest light flux diameter on the light-receiving surface 118.

More specifically, by considering a range of changes in the incident positions due to the main causes of incident position fluctuations, the light flux diameters on the light-receiving surface 118 are adjusted to α: approximately 350 µm and γ: approximately 480 µm for the light flux λR, α: approximately 300 µm and γ: approximately 420 µm for the light flux λG, and α: approximately 240 µm and γ: approximately 350 µm for the light flux λB. Note that the light flux diameters on the light-receiving surface 118 can be adjusted by adjusting the position of at least one of the condenser lens 116 and the optical detector 117 in the optical axis direction of the condenser lens 116.

In addition, when the light flux diameters are adjusted as described above, it is preferable that thickening of the light flux diameters caused by an initial tolerance of an optical member or an optical component along the optical paths and the occurrence of fluctuations in position or fluctuations in shape over time be considered as well during the adjustment.

FIG. 12 indicates a depth curve illustrating a relationship between the beam waist position of the light flux entering the optical detector 117 and the light flux diameter thereof.

A lateral axis in FIG. 12 represents a distance from the light-receiving surface 118 of the optical detector 117 in the optical axis direction of the condenser lens 116 (a direction advancing toward the condenser lens 116 from the light-receiving surface 118 serves as a positive direction), whereas a longitudinal axis represents the light flux diameter of the light flux subjected to the light condensation at the condenser lens 116 and then entering the light-receiving surface 118 of the optical detector 117. The light-receiving surface 118 of the optical detector 117 is located at the position of zero on the lateral axis and, in this case, it is observed that the light flux enters the light-receiving surface 118 with a light flux diameter of approximately 175 µm. Meanwhile, a vertical distance from the light-receiving surface 118 for which a smallest light flux diameter is obtained in the depth curve is called the beam waist position (image formation position), while the light flux diameter at the beam waist position is called a beam waist diameter. Here, the beam waist position is set to 0.5 mm to 1 mm and the beam waist diameter ranges approximately from 0 µm to 10 µm.

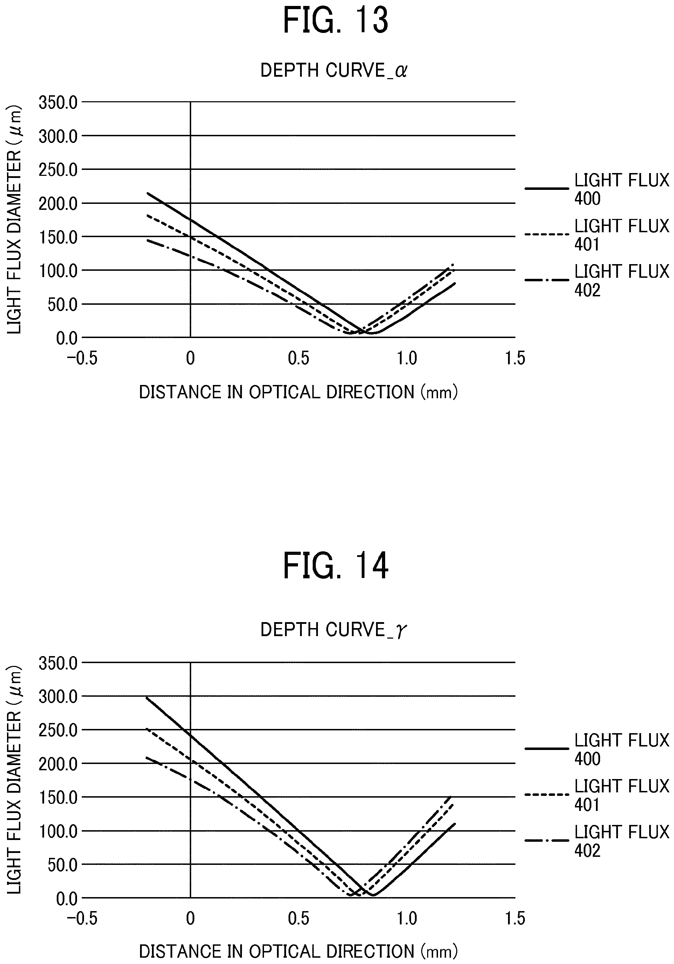

FIG. 13 and FIG. 14 illustrate relationships between the beam waist position of the light flux entering the optical detector 117 and the light flux diameter thereof corresponding to an a direction and a y direction, respectively. Here, the beam waist position of each of the light fluxes is set to 0.5 mm to 1 mm and the beam waist diameter thereof ranges approximately from 0 µm to 10 µm.

The beam waist position of the light flux 400 emitted from the light emitting element 111R and then entering the optical detector 117 is adjusted to approximately 0.84 mm, the beam waist position of the light flux 401 emitted from the light emitting element 111G and then entering the optical detector 117 is adjusted to approximately 0.78 mm, and the beam waist position of the light flux 402 emitted from the light emitting element 111B and then entering the optical detector 117 is adjusted to approximately 0.74 mm. In other words, the beam waist position of the light flux entering the light-receiving surface 118 of the optical detector 117 is adjusted so as to be further away from the light-receiving surface 118 of the optical detector 117 when the light flux has a shorter length of the optical path from the light emitting element to the optical detector 117.

In addition, in the embodiment, the incident diameter has been enlarged by shifting the beam waist position off the light-receiving surface 118 when the light flux enters the optical detector 117. However, the incident diameter may be enlarged by, for example, increasing the size of an opening of the aperture member provided in the middle of the optical path. Note that, when a member capable of adjusting an opening diameter (capable of adjusting a diaphragm) is used as the aperture member, the opening diameter of the aperture member corresponding to the light flux for which the incident diameter needs to be changed can be adjusted while the light source apparatus 11 is manufactured.

The light source apparatus 11 according to the embodiment described thus far is provided with a plurality of light sources (light emitting elements 111R, 111G, and 111B), an optical system including optical path combiners (optical path combining elements 114 and 115) that combine a plurality of beams of light from the plurality of light sources and branch the resultant combined light, a condenser element (condenser lens 116) that condenses branched light (λRGB2 from the optical system, and the optical detector 117 that receives the branched light via the condenser element, where the beam waist positions of a plurality of beams of light contained in the branched light via the condenser element are shifted off the light-receiving surface 118 of the optical detector 117.

In this case, burning of a fine particle or dust on the light-receiving surface 118 and damage to the optical detector 117 caused by the plurality of beams of light via the condenser lens 116 can be suppressed with a simple arrangement.

As a result, degradation in the detection accuracy can be suppressed, while an increase in cost is suppressed.

Meanwhile, when the lengths of the optical paths from the plurality of light sources to the optical detector 117 differ from one another, it is preferable that light with a longer length of the optical path from the light source to the optical detector 117 have a beam waist position with a smaller amount of a shift off the light-receiving surface 118.

In this case, the size of the light spot on the light-receiving surface 118 can be made smaller for light with a larger shift of the incident position due to the main causes of incident position fluctuations. As a result, a change in the incident light amount on the optical detector 117 can be suppressed.

Additionally, when the lengths of the optical paths from the plurality of light sources to the optical detector 117 differ from one another, it is preferable that light with a longer length of the optical path from the light source to the optical detector 117 have a smaller cross-section of incident light on the light-receiving surface 118.

In this case, the size of the light spot on the light-receiving surface 118 can be made smaller for light with a larger shift of the incident position due to the main causes of incident position fluctuations. As a result, a change in the incident light amount on the optical detector 117 can be suppressed.

Furthermore, when at least two beams of light have wavelengths different from each other and the light-receiving surface 118 is located between the condenser element 116 and the beam waist positions of the plurality of beams of light, it is preferable that, among the two beams of light, at least a beam of light with a shorter wavelength (a beam of light with a larger refractive index at the condenser lens 116) have a longer length of the optical path from the light source to the optical detector 117.

In this case, a change in the incident light amount on the optical detector 117 can be suppressed more definitely.

It is also preferable that the position of the condenser element 116 in the optical axis direction and the position of the optical detector 117 in the optical axis direction be set such that the beam waist positions of the plurality of beams of light are shifted off the light-receiving surface 118.

In this case, the beam waist positions of the plurality of beams of light can be shifted off the light-receiving surface 118 with a simple approach.

Meanwhile, also by way of another simple approach in which different sizes from one another are set for the openings of the plurality of apertures (openings) provided to correspond to the plurality of light sources and arranged on the optical paths between the corresponding light sources and the optical path combiners (optical system), the sizes of the light spots of the plurality of beams of light on the light-receiving surface 118 can be adjusted.

Additionally, it is preferable that at least two openings be configured such that one with a longer length of the optical path of the corresponding light from the light source to the optical detector has a smaller opening.

In this case, the size of the light spot on the light-receiving surface 118 can be made smaller for light with a longer length of the optical path from the light source to the optical detector.

Furthermore, the plurality of beams of light has wavelengths different from one another and a beam of light with a longer wavelength among the plurality of beams of light has a shorter length of the optical path from the light source to the optical detector 117. Accordingly, while degradation in the light use efficiency can be suppressed, the size of the light spot on the light-receiving surface 118 can be increased for a beam of light with a relatively small change in the incident position due to the main causes of incident position fluctuations. At the same time, the size of the light spot on the light-receiving surface 118 can be reduced for a beam of light with a relatively large change in the incident position due to the main causes of incident position fluctuations.

Meanwhile, when the plurality of light sources includes a first light source that emits red light, a second light source that emits green light, and a third light source that emits blue light, white can be expressed therewith.

The plurality of light sources may also include a plurality of light sources of at least one type from among the first to third light sources.

For example, the plurality of light sources may include a plurality of light sources that emit red light, a light source that emits green light, and a light source that emits blue light. In this case, luminance can be enhanced. Note that, in this case, it is preferable that the respective optical paths from the plurality of light sources that emit red light to the optical detector 117 have substantially the same length with one another. In specific terms, for example, the plurality of light sources that emit red light may be arranged in line along the γ direction.

For example, the plurality of light sources may include a light source that emits red light, a plurality of light sources that emit green light, and a light source that emits blue light. Also in this case, luminance can be enhanced. Note that, in this case, it is preferable that the respective optical paths from the plurality of light sources that emit green light to the optical detector 117 have substantially the same length with one another. In specific terms, for example, the plurality of light sources that emit green light may be arranged in line along the γ direction.

For example, the plurality of light sources may include a plurality of light sources that emit red light, a plurality of light sources that emit green light, and a light source that emits blue light. Also in this case, luminance can be enhanced. Note that, in this case, it is preferable that the respective optical paths from the plurality of light sources that emit red light to the optical detector 117 have substantially the same length with one another. Similarly, it is preferable that the respective optical paths from the plurality of light sources that emit green light to the optical detector 117 have substantially the same length with one another. In specific terms, for example, the plurality of light sources that emit red light and the plurality of light sources that emit green light may be individually arranged in line along the γ direction.

For example, the plurality of light sources may include a plurality of light sources that emit red light, a plurality of light sources that emit green light, and a plurality of light sources that emit blue light. Also in this case, luminance can be enhanced. Note that, in this case, it is preferable that the respective optical paths from the plurality of light sources that emit red light to the optical detector 117 have substantially the same length with one another. Similarly, it is preferable that the respective optical paths from the plurality of light sources that emit green light to the optical detector 117 have substantially the same length with one another. Similarly, it is preferable that the respective optical paths from the plurality of light sources that emit blue light to the optical detector 117 have substantially the same length with one another. In specific terms, for example, the plurality of light sources that emit red light, the plurality of light sources that emit green light, and the plurality of light sources that emit blue light may be individually arranged in line along the γ direction.

Meanwhile, the HUD 100 is provided with the light source apparatus 11 and the light deflector 15 (image forming element) that forms an image with light from the light source apparatus 11. Accordingly, an image with high visibility (an image having desired luminance and a desired color) can be stably displayed, while an increase in cost is suppressed

In addition, the HUD 100 is further provided with the control system including the FPGA 600 and the LD driver 6111, which controls the output of the respective light sources (light emitting elements) on the basis of the signal from the optical detector 117 of the light source apparatus 11. Accordingly, the output from these light sources can be controlled stably and accurately.

Besides, the HUD 100 is further provided with the screen 30 that is irradiated with light forming an image. Accordingly, the intermediate image can be formed on the screen 30.

Additionally, the light source apparatus 11, the light deflector 15, and the screen 30 are arranged such that, among the plurality of beams of light, a beam of light with a longer wavelength has a shorter length of the optical path from the light source apparatus 11 to the screen 30. Accordingly, the luminance of the intermediate image formed on this screen 30 can be enhanced.

In addition, the HUD 100 is further provided with the concave mirror 40 (light projector) that projects light via the screen 30 toward the transmission reflection member (e.g., the front window shield 50). Accordingly, a desired area on the front window shield 50 can be irradiated with the light via the screen 30.

Furthermore, according to a moving assembly apparatus including the HUD 100 and a moving assembly (e.g., a car) equipped with the HUD 100, an image with high visibility (virtual image) can be stably provided for an operator of the moving assembly.

Meanwhile, an optical detection method according to the embodiment includes a process of combining the plurality of beams of light from the plurality of light sources (light emitting elements) and branching the combined light constituted by the plurality of beams of light and a process of causing the plurality of beams of light contained in the branched light derived from the combined light to form an image at a position shifted off the light-receiving surface 118 of the optical detector 117.

In this case, burning of a fine particle or dust on the light-receiving surface 118 and damage to the optical detector 117 caused by the plurality of beams of light contained in the branched light can be suppressed with a simple approach.

As a result, degradation in the detection accuracy can be suppressed, while an increase in cost is suppressed.

In addition, it is preferable that, in the process of attaining image formation, a position where each of the plurality of beams of light contained in the branched light forms an image have a smaller amount of a shift off the light-receiving surface 118 in the case of a beam of light with a longer length of the optical path from the light source to the optical detector 117.

In this case, the size of the light spot on the light-receiving surface 118 can be made smaller for a beam of light with a longer length of the optical path, in which the amount of a shift of the incident position increases due to the main causes of incident position fluctuations. As a result, a change in the incident light amount on the optical detector 117 can be suppressed.

Additionally, a manufacturing method for the light source apparatus 11 according to the embodiment is a manufacturing method for a light source apparatus that combines the plurality of beams of light from the plurality of light sources (light emitting elements), branches the resultant combined light, and receives the resultant branched light with the optical detector 117 via the condenser element (condenser lens 116), including a process of adjusting the position of at least one of the condenser element and the optical detector 117 with respect to the optical axis direction of the condenser element such that the beam waist positions of the plurality of beams of light contained in the branched light via the condenser element are shifted off the light-receiving surface 118 of the optical detector 117.

In this case, damage to the light-receiving surface 118 and so on caused by the plurality of beams of light can be suppressed with a simple approach.

Meanwhile, when the plurality of beams of light from the plurality of light sources has wavelengths different from one another and the light-receiving surface 118 is located between the condenser element 116 and the beam waist positions of the plurality of beams of light, by considering the amount of a shift off the light-receiving surface 118 at the beam waist positions of the plurality of beams of light contained in the branched light, it is preferable that the plurality of light sources be arranged such that a beam of light with a shorter wavelength has a longer length of the optical path from the light source to the optical detector 117.

In this case, the size of the light spot on the light-receiving surface 118 can be made smaller for a beam of light with a longer length of the optical path (a beam of light with a shorter wavelength), in which a shift of the incident position increases due to the main causes of incident position fluctuations. As a result, a change in the incident light amount on the optical detector 117 can be suppressed.

Procedures for manufacturing the light source apparatus 11 will be briefly described. First, a plurality of constituent components constituting the light source apparatus 11 is positioned on holders (not illustrated) to be secured within a cabinet (note that the condenser lens 116 is temporarily secured) such that a predetermined arrangement such as one illustrated in FIG. 6 is obtained (an arrangement in which a longest length of the optical path is obtained for an optical path from the light emitting element 111B to the optical detector 117 and simultaneously, a shortest length of the optical path is obtained for an optical path from the light emitting element 111R to the optical detector 117). Thereafter, three light emitting elements 111R, 111B, and 111G are turned on and, while the light fluxes of three colors on the light-receiving surface 118 are checked under a microscope or the like, the position of the condenser lens 116 in the optical axis direction is adjusted such that the beam waist positions of the respective light fluxes are shifted off the light-receiving surface 118. Subsequently, the condenser lens 116 is positioned on the holder to be secured in a state after the adjustment. Note that, in order to shift the beam waist positions of the respective light fluxes off the light-receiving surface 118, instead of the condenser lens 116 or in addition thereto, the optical detector 117 may be temporarily secured such that the position of the optical detector 117 in the optical axis direction of the condenser lens 116 is to be adjusted.

In addition, although the aforementioned embodiment employs the condenser lens as the condenser element, a condenser mirror may be used. Alternatively, the condenser element may be a combination of a plurality of lenses, a combination of a plurality of mirrors, or a combination of a lens and a mirror.

Meanwhile, in the aforementioned embodiment, the lengths of the optical paths of light from the plurality of light sources to the optical detector 117 differ from one another. However, the embodiment is not limited thereto and an essential point is that, preferably, at least two beams of light among the plurality of beams of light from the plurality of light sources have lengths of the optical paths different from each other. It is also preferable that, among at least two beams of light having lengths of the optical paths different from each other, a beam of light with a longer length of the optical path from the light source to the optical detector 117 have a smaller size of the light spot on the light-receiving surface, specifically, a smaller amount of a shift of the beam waist position off the light-receiving surface or a larger size of the opening of the corresponding aperture member.

Furthermore, in the aforementioned embodiment, the length of the optical path from the light source to the optical detector is made shorter for a beam of light with a longer wavelength. However, the embodiment is not limited thereto. Specifically, the arrangements of the light emitting elements 111R, 111G, and 111B may be replaced with each other as appropriate.

In addition, in the aforementioned embodiment, the beam waist positions of three beams of light via the condenser lens 116 are shifted off the light-receiving surface toward a side of the condenser lens 116. In contrast to this, the beam waist position of at least one beam of light may be shifted toward an opposite side of the condenser lens 116.

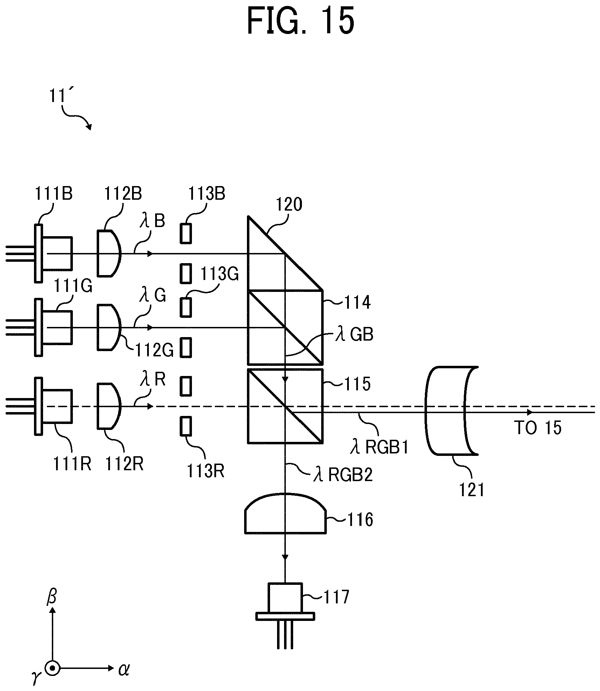

Moreover, the arrangement of the light source apparatus according to the invention is not limited to ones described in the aforementioned embodiment and can be modified as appropriate. For example, an arrangement such as one for a light source apparatus 11' according to a variation illustrated in FIG. 15 may be adopted.

In the light source apparatus 11', the three light emitting elements 111R, 111G, and 111B are placed in order in the β direction and the emitting directions of the respective light emitting elements are set to the +α direction. The light flux λB from the light emitting element 111B is reflected at a dichroic mirror 120 and the optical path thereof is combined with that of the light flux λG from the light emitting element 111G by the optical path combining element 114. Thereafter, the resultant combined light flux λRG is combined with the light flux λR from the light emitting element 111R by the optical path combining element 115. The resultant combined light flux λRGB is branched into the combined light fluxes λRGB1 and λRGB2 at the optical path combining element 115. The combined light flux λRGB1 enters the light deflector 15 via a meniscus lens 121 whose concave surface faces a side of the light deflector 15, whereas the combined light flux λRGB2 enters the optical detector 117 via the condenser lens 116. Here, the lengths of the optical paths are set such that λB > λG > λR is obtained. However, setting is not limited thereto and can be modified as appropriate.

Also in the light source apparatus 11', by introducing an approach similar to that for the light source apparatus 11 according to the aforementioned embodiment, actions and effects similar to those of the light source apparatus 11 can be achieved.

Meanwhile, although the light projector includes the concave mirror 40 in the aforementioned embodiment, the light projector is not limited thereto and may include, for example, a convex reflector.

In addition, although the scanning mirror 20 is provided in the aforementioned embodiment, no scanning mirror 20 may be provided. Specifically, light deflected at the light deflector 15 may be caused not to turn around on the optical path such that the screen 30 is directly irradiated with that light or irradiated therewith via a convex lens. Note that a plane reflector may be used as the scanning mirror 20.

Furthermore, although the condenser lens 116 and the optical detector 117 have been arranged within the cabinet in the aforementioned embodiment, at least one of them may be arranged at the outside of the cabinet.

Additionally, the aforementioned embodiment employs the LD as the light source 11. However, another laser such as a vertical cavity surface emitting laser (VCSEL) or the like may be employed.

Meanwhile, the transmission reflection member is not limited to a front glass of the moving assembly and, for example, a side glass or a rear glass may be employed. An essential point is that, preferably, the transmission reflection member serves as a window member (window shield) provided in the moving assembly to be used by a boarding person of the moving assembly when the outside of the moving assembly is visually recognized.

In addition, in the above description, the aforementioned embodiment has assumed that the image display apparatus (HUD) is used for being equipped in the moving assembly such as a vehicle, an aircraft, a vessel, or an industrial robot. Alternatively, any image display apparatus may be equipped in any system with any desired object, such as a transportable object. Further, the image display apparatus may be permanently installed with such object.

Besides, the image display apparatus according to the invention can be also applied to, for example, a head-mounted display apparatus, a prompter apparatus, or a projector apparatus as well as the HUD.

For example, when the image display apparatus is applied to the projector apparatus, the projector apparatus can be configured similarly to the HUD 100. Specifically, image light via the concave mirror 40 can be projected on a projection screen, a wall surface, or the like. Note that no concave mirror 40 may be provided such that image light via the screen 30 is projected on a projection screen, a wall surface, or the like. In addition, a free-form mirror may be employed instead of the concave mirror 40.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of the appended claims.

## Claims

1. A light source apparatus (11) for an image display apparatus, the light source apparatus (11) comprising:
first and second laser light sources (111B, 111G) configured to emit first and second light beams respectively, the first light beam having a shorter wavelength than the second light beam;
an optical system (114, 115) configured to combine the first and second light beams and divide the combined light in to an image-drawing beam (λRGB1) and a monitoring beam (λRGB2) and
an optical detector (117) configured to receive the monitoring beam;
wherein the first light beam has an optical path length that is longer than an optical path length of the second light beam, the optical path length being a length from the respective light source to the optical detector; **characterized by**:
a condenser element (116) located in the path of the monitoring beam before the optical detector and configured to condense the monitoring beam from the optical system; and in that:
the positions of the beam waists of the first and second light beams, included in the monitoring beam received via the condenser element, are shifted away from a light-receiving surface of the optical detector along the optical axis of the condenser element; and
the light-receiving surface is located between the condenser element and the positions of the beam waists of the first and second light beams.

2. The light source apparatus (11) according to claim 1, wherein the position of the beam waist of the first light beam has a smaller amount of a shift away from the light-receiving surface at the beam position, than the second light beam.

3. The light source apparatus (11) according to claim 1, wherein the first light beam has a smaller cross-section of incident light on the light-receiving surface, than the second light beam.

4. The light source apparatus (11) according to any one of claims 1 to 3, further comprising:
a plurality of openings respectively provided for the plurality of light sources, each of the plurality of openings being arranged on the optical path between the corresponding light source and the optical system, wherein
at least two openings of the plurality of openings corresponding to the at least two light beams are different in size.

5. The light source apparatus (11) according to claim 4, wherein
the at least two openings include a first opening and a second opening, the first opening being corresponding to one of the plurality of light sources having a longer optical path than an optical path of other one of the plurality of light sources corresponding to the second opening,
and
the first opening has a smaller opening than the second opening.

6. The light source apparatus (11) according to any one of claims 1 to 5, wherein
the first light source (111B) is configured to emit blue light, and the second light source (111G) is configured to emit green light; further comprising a third light source (111R) configured to emit red light.

7. An image display apparatus comprising:
the light source apparatus (11) according to any one of claims 1 to 6; and
an image forming element (15) configured to form an image with light from the light source apparatus.

8. The image display apparatus according to claim 7, further comprising:
a control system to control output of the light sources based on an output signal from the optical detector of the light source apparatus.

9. The image display apparatus according to claim 7 or 8, further comprising a screen configured to be irradiated with the light forming an image.

10. The image display apparatus according to claim 9, further comprising a light projector (40) configured to project light via the screen toward a transmission reflection member.

11. A system comprising:
the image display apparatus according to any one of claims 7 to 10; and
an object in which the image display apparatus is installed.

12. The system according to claim 11, wherein the object is a moving body.

## Patentansprüche

1. Lichtquellenvorrichtung (11) für eine Bildanzeigevorrichtung, wobei die Lichtquellenvorrichtung (11) Folgendes umfasst:
eine erste und eine zweite Laserlichtquelle (111B, 111G), die konfiguriert sind, um einen ersten bzw. einen zweiten Lichtstrahl zu emittieren,
wobei der erste Lichtstrahl eine kürzere Wellenlänge hat als der zweite Lichtstrahl;
ein optisches System (114, 115), das konfiguriert ist, um den ersten und den zweiten Lichtstrahl zu kombinieren und das kombinierte Licht in einen Bildzeichnungsstrahl (λRGB1) und einen Kontrollstrahl (λRGB2 aufzuteilen, und
einen optischen Detektor (117), der konfiguriert ist, um den Kontrollstrahl zu empfangen;
wobei der erste Lichtstrahl eine optische Weglänge hat, die länger als eine optische Weglänge des zweiten Lichtstrahls ist, wobei die optische Weglänge eine Länge von der jeweiligen Lichtquelle zu dem optischen Detektor ist; **gekennzeichnet durch**:
ein Kondensorelement (116), das sich im Weg des Kontrollstrahls vor dem optischen Detektor befindet und konfiguriert ist, um den Kontrollstrahl von dem optischen System zu konzentrieren; und **dadurch, dass**:
die Positionen der Strahltaillen des ersten und des zweiten Lichtstrahls, die in dem Kontrollstrahl enthalten sind, der über das Kondensorelement empfangen wird, weg von einer Lichtempfangsfläche des optischen Detektors entlang der optischen Achse des Kondensorelements verschoben sind; und
sich die Lichtempfangsfläche zwischen dem Kondensorelement und den Positionen der Strahltaillen des ersten und zweiten Lichtstrahls befindet.

2. Lichtquellenvorrichtung (11) nach Anspruch 1, wobei die Position der Strahltaille des ersten Lichtstrahls einen kleineren Betrag einer Verschiebung weg von der Lichtempfangsfläche bei der Strahlposition hat als der zweite Lichtstrahl.

3. Lichtquellenvorrichtung (11) nach Anspruch 1, wobei
der erste Lichtstrahl einen kleineren Querschnitt von einfallendem Licht auf die Lichtempfangsfläche hat als der zweite Lichtstrahl.

4. Lichtquellenvorrichtung (11) nach einem der Ansprüche 1 bis 3, die ferner Folgendes umfasst:
eine Vielzahl von Öffnungen, die jeweils für die Vielzahl von Lichtquellen bereitgestellt sind, wobei jede der Vielzahl von Öffnungen auf dem optischen Weg zwischen der entsprechenden Lichtquelle und dem optischen System angeordnet ist, wobei
mindestens zwei Öffnungen der Vielzahl von Öffnungen, die den mindestens zwei Lichtstrahlen entsprechen, unterschiedlich groß sind.

5. Lichtquellenvorrichtung (11) nach Anspruch 4, wobei
die mindestens zwei Öffnungen eine erste Öffnung und eine zweite Öffnung enthalten, wobei die erste Öffnung einer der Vielzahl von Lichtquellen mit einem längeren optischen Weg als ein optischer Weg einer anderen der Vielzahl von Lichtquellen, die der zweiten Öffnung entspricht, entspricht, und
die erste Öffnung eine kleinere Öffnung hat als die zweite Öffnung.

6. Lichtquellenvorrichtung (11) nach einem der Ansprüche 1 bis 5, wobei
die erste Lichtquelle (111B) konfiguriert ist, um blaues Licht zu emittieren, und die zweite Lichtquelle (111G) konfiguriert ist, um grünes Licht zu emittieren; ferner umfassend eine dritte Lichtquelle (111R), die konfiguriert ist, um rotes Licht zu emittieren.

7. Bildanzeigevorrichtung, die Folgendes umfasst:
die Lichtquellenvorrichtung (11) nach einem der Ansprüche 1 bis 6; und
ein Bilderzeugungselement (15), das konfiguriert ist, um ein Bild mit Licht von der Lichtquellenvorrichtung zu erzeugen.

8. Bildanzeigevorrichtung nach Anspruch 7, die ferner Folgendes umfasst:
ein Steuersystem, um eine Ausgabe der Lichtquellen basierend auf einem Ausgabesignal von dem optischen Detektor der Lichtquellenvorrichtung zu steuern.

9. Bildanzeigevorrichtung nach Anspruch 7 oder 8, ferner umfassend einen Bildschirm, der konfiguriert ist, um mit dem Licht, das ein Bild erzeugt, bestrahlt zu werden.

10. Bildanzeigevorrichtung nach Anspruch 9, ferner umfassend einen Lichtprojektor (40), der konfiguriert ist, um Licht über den Bildschirm in Richtung eines Übertragungsreflexionselements zu projizieren.

11. System, das Folgendes umfasst:
die Bildanzeigevorrichtung nach einem der Ansprüche 7 bis 10; und
ein Objekt, in dem die Bildanzeigevorrichtung installiert ist.

12. System nach Anspruch 11, wobei das Objekt ein bewegter Körper ist.

## Revendications

1. Appareil de source lumineuse (11) pour un appareil d'affichage d'image, l'appareil de source lumineuse (11) comprenant :
des premières et deuxièmes sources de lumière laser (111B, 111G) conçues pour émettre des premiers et deuxièmes faisceaux lumineux respectivement,
le premier faisceau lumineux présentant une longueur d'onde plus courte que le deuxième faisceau lumineux ;
un système optique (114, 115) conçu pour combiner les premier et deuxième faisceaux lumineux et diviser la lumière combinée en un faisceau de tracé d'image (λRGB1) et un faisceau de surveillance (λRGB2) et
un détecteur optique (117) conçu pour recevoir le faisceau de surveillance ;
le premier faisceau lumineux présentant une longueur de trajet optique qui est plus longue qu'une longueur de trajet optique du deuxième faisceau lumineux, la longueur du trajet optique étant une longueur allant de la source lumineuse respective au détecteur optique ; **caractérisé par** :
un élément condenseur (116) situé dans le trajet du faisceau de surveillance avant le détecteur optique et conçu pour condenser le faisceau de surveillance à partir du système optique ; et en ce que :
les positions des cols de faisceau des premier et deuxième faisceaux lumineux, comprises dans le faisceau de surveillance reçu par le biais de l'élément condenseur, sont déplacées d'une surface de réception de lumière du détecteur optique le long de l'axe optique de l'élément condenseur ; et
la surface de réception de lumière est située entre l'élément condenseur et les positions des cols de faisceau des premier et deuxième faisceaux lumineux.

2. Appareil de source lumineuse (11) selon la revendication 1, dans lequel la position du col de faisceau du premier faisceau lumineux présente une quantité inférieure d'un glissement de la surface de réception de lumière au niveau de la position de faisceau, au deuxième faisceau lumineux.

3. Appareil de source lumineuse (11) selon la revendication 1, dans lequel
le premier faisceau lumineux présente une section transversale inférieure de lumière incidente sur la surface de réception de lumière, au deuxième faisceau de lumière.

4. Appareil de source lumineuse (11) selon l'une quelconque des revendications 1 à 3, comprenant en outre :
une pluralité d'ouvertures respectivement prévues pour la pluralité de sources lumineuses, chacune de la pluralité d'ouvertures étant agencée sur le trajet optique entre la source lumineuse correspondante et le système optique,
au moins deux ouvertures de la pluralité d'ouvertures correspondant aux au moins deux faisceaux lumineux étant de taille différente.

5. Appareil de source lumineuse (11) selon la revendication 4, dans lequel
les au moins deux ouvertures comprennent une première ouverture et une deuxième ouverture, la première ouverture correspondant à une de la pluralité de sources lumineuses présentant un trajet optique plus long qu'un trajet optique d'un autre de la pluralité de sources lumineuses correspondant à la deuxième ouverture, et
la première ouverture présentant une plus petite ouverture que la deuxième ouverture.

6. Appareil de source lumineuse (11) selon l'une quelconque des revendications 1 à 5, dans lequel
la première source lumineuse (111B) est conçue pour émettre une lumière bleue, et la deuxième source lumineuse (111G) est conçue pour émettre une lumière verte ; comprenant en outre une troisième source lumineuse (111R) conçue pour émettre une lumière rouge.

7. Appareil d'affichage d'image comprenant :
l'appareil de source lumineuse (11) selon l'une quelconque des revendications 1 à 6; et
un élément de formation d'image (15) conçu pour former une image avec la lumière provenant de l'appareil de source lumineuse.

8. Appareil d'affichage d'image selon la revendication 7, comprenant en outre :
un système de commande pour commander la sortie des sources lumineuses en fonction d'un signal de sortie provenant du détecteur optique de l'appareil de source lumineuse.

9. Appareil d'affichage d'image selon la revendication 7 ou 8, comprenant en outre un écran conçu pour être irradié avec la lumière formant une image.

10. Appareil d'affichage d'image selon la revendication 9, comprenant en outre un projecteur de lumière (40) conçu pour projeter la lumière par le biais de l'écran vers un élément de réflexion transmission.

11. Système comprenant :
l'appareil d'affichage d'image selon l'une quelconque des revendications 7 à 10 ; et
un objet dans lequel l'appareil d'affichage d'image est installé.

12. Système selon la revendication 11, dans lequel l'objet est un corps mobile.
